# EUROPÄISCHE PATENTSCHRIFT

(11) **EP 3 730 409 B1**
(45) Veröffentlichungstag und Bekanntmachung des Hinweises auf die Patenterteilung: **01.06.2022**
(21) Anmeldenummer: 19170578.9
(22) Anmeldetag: 23.04.2019
(51) Int. Cl.: B64F 1/305

(54) **FLUGGASTBRÜCKE MIT EINER KABINE UND EINEM KUPPELMODUL**
PASSENGER BOARDING BRIDGE WITH A CABIN AND A COUPLING MODULE
PASSERELLE D'EMBARQUEMENT DES PASSAGERS AVEC UNE CABINE ET UN MODULE DE COUPLAGE

(43) Veröffentlichungstag der Anmeldung: 28.10.2020
(73) Patentinhaber: Hübner GmbH & Co. KG, 34123 Kassel (DE)
(72) Erfinder: Schuster, Heinz, 34123 Kassel (DE); Keßler, Dirk-W., 34246 Vellmar (DE)

(56) Entgegenhaltungen:
- EP-A1- 2 987 730
- EP-A2- 1 867 569
- WO-A1-00/55038
- CN-U- 207 670 685
- JP-A- S61 261 196
- US-B1- 7 168 119

## Beschreibung

Die vorliegende Erfindung betrifft ein Kuppelmodul zur Bildung einer Schnittstelle zwischen der Kabine einer Fluggastbrücke und einem Flugzeug, wobei das Kuppelmodul ein Vordach und eine vom Vordach überspannte Bodeneinrichtung aufweist.

Fluggastbrücken sind aus dem Stand der Technik hinreichend bekannt. Diese dienen dem Übergang von Personen von dem Flugzeug unmittelbar in das Flughafengebäude. In diesem Zusammenhang ist aus der EP 3 315 416 A1 eine Fluggastbrücke mit einem Kuppelmodul bekannt, wobei das Kuppelmodul um eine gedachte horizontale Mittelachse verschwenkbar ist. Dies vor dem Hintergrund, dass der Zutritt in das Flughafengebäude häufig höher angeordnet ist als die Türöffnung des Flugzeugs. Die Fluggastbrücke, die am vorderen Ende durch ein Fahrgestell gehalten ist, verläuft insofern schräg nach unten in Richtung auf die Türöffnung des Flugzeugs zu. Um das Kuppelmodul an die Türöffnung des Flugzeugs anzupassen, kann dieses an der Kabine der Fluggastbrücke um eine gedachte horizontale Achse derart verschwenkt werden, dass die Bodeneinrichtung in einer Ebene mit dem Flugzeugboden liegt.

Vielfach ist es allerdings auch so, dass eine Verschwenkung des Kuppelmoduls nicht erforderlich ist, weil der Höhenunterschied zwischen der Türöffnung des Flugzeugs und dem Gebäudeausgang so gering ist, dass die Fluggastbrücke nahezu horizontal verläuft, was, wie bereits ausgeführt, eine Verschwenkbarkeit des Kuppelmoduls obsolet macht.

Darüber hinaus sind Bodeneinrichtungen mit einem sogenannten Schiebeboden mit einzelnen Bodenelementen bekannt, wobei die Bodenelemente einzeln in Richtung des Flugzeugrumpfes ausfahrbar sind, um der Kontur des Flugzeugs im Bereich des Flugzeugzugangs folgend eine Spaltbildung zwischen der Frontseite der Bodeneinrichtung und dem Flugzeugrumpf zu vermeiden bzw. zumindest zu vermindern. Eine solche Bodeneinrichtung ist z. B. aus dem Dokument EP 3 301 028 A1 bekannt.

Aus dem Dokument CN 207 670 685 U ist eine Fluggastbrücke bekannt, an deren Rotunde ein Kuppelmodul angeordnet ist. Das Kuppelmodul weist einen ersten Abschnitt auf, welcher als Kabine z. B. für Servicepersonal dient, das die Fluggastbrücke beim Andockvorgang an ein Flugzeug bedient. Der zweite Abschnitt des Kuppelmoduls ist durch einen Mittelrahmen mit dem ersten Abschnitt verbunden und umfasst ein Faltenvordach und eine Art Schiebeboden. Der Schiebeboden kann durch eine Führungsschiene geführt auf das Flugzeug zu und von diesem weg bewegt werden. Zusätzlich kann die dem Flugzeug zugewandte Stirnseite des Schiebebodens angehoben und abgesenkt werden, wozu beidseitig des Schiebebodens Antriebe angeordnet sind durch welche der Schiebeboden um eine horizontale Achse verschwenkbar an dem Mittelrahmen befestigt ist.

Weitere Beispiele für Fluggastbrücken und an deren Kabinen angeordnete Kuppelmodule sind aus den Dokumenten JP S61 261196 A, EP 2 987 730 A1 und EP 1 867 569 A2 bekannt.

Fluggastbrücken mit nicht verschwenkbaren Kuppelmodulen sind vielfach und bereits seit Jahrzehnten im Einsatz. Solche Kuppelmodule verschleißen über die Zeit, was nicht nur in Bezug auf das balgartig ausgebildete Vordach gilt, sondern auch in Bezug auf die Bodeneinrichtung, die vom Vordach überspannt wird.

Insbesondere dann, wenn lediglich die Bodeneinrichtung getauscht werden muss, wird diese von der Kabine mechanisch getrennt, wobei nach dem Stand der Technik der neue Boden wiederum an die Kabine angeschweißt wird. Das Anschweißen der Bodeneinrichtung an die Kabine ist nicht unproblematisch, da durch den Schweißvorgang Wärme in das die Kabine bildende Material eingeführt wird, was zu Verspannungen und entsprechenden Formänderungen an der Stirnseite der Kabine führen kann.

Eine vereinfachte Montage einer Bodeneinrichtung an die Kabine einer Fluggastbrücke zeichnet sich erfindungsgemäß durch die Merkmale von Anspruch 1 aus. Vorteilhafte Merkmale und Ausgestaltungen der Erfindung ergeben sich aus den Unteransprüchen.

Die erfindungsgemäße Fluggastbrücke weist eine Kabine und ein Kuppelmodul auf. Dabei ist vorgesehen, dass die Bodeneinrichtung mit ihrer der Kabine zugewandten Stirnseite an der Kabine durch mindestens ein lösbares Befestigungsmittel, insbesondere mehrere lösbare Befestigungsmittel, befestigbar ist, und dass die Bodeneinrichtung beabstandet zu ihrer Stirnseite durch mindestens ein Abspannmittel mit der Kabine verbindbar ist.

Als lösbare Befestigungsmittel zur Verbindung der Bodeneinrichtung mit der Kabine kommen insbesondere Schrauben in Frage. Diese haben gegenüber einer Schweißverbindung den Vorteil, dass die Schrauben beliebig oft lösbar sind. So kann zumindest in diesem Bereich die Demontage der Bodeneinrichtung wesentlich vereinfacht werden. In diesem Zusammenhang hat es sich als vorteilhaft herausgestellt, wenn zur Befestigung der Bodeneinrichtung mit ihrer der Kabine zugewandten Stirnseite die Bodeneinrichtung eine Tragstruktur aufweist, die durch die Befestigungsmittel mit der Kabine verbunden ist.

Nach dem weiteren Merkmal ist vorgesehen, dass die Bodeneinrichtung beabstandet zu ihrer Stirnseite durch mindestens ein Abspannmittel mit der Kabine verbunden werden kann. Als Abspannmittel dienen insbesondere Seile oder Stangen. Üblicherweise werden die Seile und/oder Stangen auf Zug beansprucht. In Abhängigkeit vom Einbauzustand kann eine Stange allerdings auch auf Druck beansprucht werden.

In Bezug auf die Anordnung der Seile oder Stangen einerseits an der Kabine und andererseits an der Bodeneinrichtung kann vorgesehen sein, dass jeweils im Seitenbereich der Bodeneinrichtung mindestens ein Abspannmittel beabstandet zur Stirnseite der Bodeneinrichtung, das heißt auch beabstandet zur Stirnseite der Kabine, an der Bodeneinrichtung angeordnet ist, wobei das Abspannmittel an seinem anderen Ende zur Verbindung mit der Kabine vorgesehen ist. Vorzugsweise sind in jedem Seitenbereich zwei Abspannmittel vorgesehen, die beabstandet zur Stirnseite der Bodeneinrichtung angeordnet sind und mit ihrem jeweils anderen Ende mit der Kabine verbunden werden kann.

Hieraus wird deutlich, dass die Bodeneinrichtung durch lösbare Befestigungsmittel mit ihrer der Kabine zugewandten Stirnseite an der Kabine angeordnet werden kann. Die Bodeneinrichtung als Kragelement kann insofern vertikale Kräfte aufnehmen. Durch die beschriebene Abspannung mithilfe des mindestens einen Abspannmittels können allerdings wesentlich größere Kräfte bzw. Momente abgefangen werden, insbesondere, wenn die Bodeneinrichtung unter einer erhöhten Last steht.

Dies kann beispielsweise der Fall sein, wenn mehrere Personen dort auf den Zugang zum Flugzeug warten. Es hat sich herausgestellt, dass die erfindungsgemäße Bodeneinrichtung in der Lage ist eine Prüflast von ca. 375 kg aufzunehmen.

Um eine erhöhte Stabilität der Bodeneinrichtung durch die Abspannung zu gewährleisten, ist vorteilhaft vorgesehen, dass die vorzugsweise beiden Abspannmittel zu jeder Seite der Bodeneinrichtung, insbesondere hintereinander und beabstandet zueinander an der Bodeneinrichtung angeordnet sind.

Das mindestens eine Abspannmittel ist vorteilhaft in seiner Länge veränderbar. Dies kann beispielsweise dadurch geschehen, dass eine als Abspannmittel dienende Stange zweigeteilt ist, wobei die beiden Teile durch ein Gewinde miteinander in Verbindung stehen. Bei Seilen sind sogenannte Seilspanner bekannt, mithilfe derer das Seil verkürzt oder verlängert werden kann. Alternativ kann ein Abspannmittel in Form eines Seils auch mehrere Schlaufen oder Ösen aufweisen, wodurch die Abspannlänge verändert werden kann. Durch die Längenveränderbarkeit der/des Abspannmittels bzw. der Abspannlänge ist es beispielsweise möglich, die Bodeneinrichtung horizontal auszurichten.

Es hat sich als weiterhin vorteilhaft herausgestellt, wenn die vorzugsweise beiden Abspannmittel so ausgebildet sind und insbesondere in ihrer Länge so bemessen sind, dass sie jeweils in der oberen Hälfte, vorzugsweise im oberen Drittel der Kabine angelenkt werden können. Insbesondere können so die größten Momente abgefangen werden.

Erfindungsgemäß ist vorgesehen, dass die Kabine an jeder Hochseite eine Konsole zur Aufnahme des oder der Abspannmittel aufweist. Die Konsole dient dabei primär der Aussteifung der Kabine im Anbindungsbereich der Abspannmittel.

Ferner ist vorgesehen, dass die Konsolen seitlich über die Kabine überstehen. D. h. die Abspannmittel können seitlich an dem Vordach vorbeigeführt werden, wobei auch die Bodeneinrichtung entsprechend der Konsole seitlich über das Vordach übersteht.

Die Fixierung der Konsole an der Kabine der Fluggastbrücke kann durch Schrauben erfolgen.

Anhand der Zeichnungen wird die Erfindung nachstehend beispielhaft näher erläutert.
- Fig. 1: zeigt das Kuppelmodul in perspektivischer Darstellung;
- Fig. 2: zeigt eine Seitenansicht auf das Kuppelmodul, wobei das Vordach weggelassen ist;
- Fig. 2a: und
- Fig. 2b: zeigen schematisch zwei unterschiedliche Arten der Anordnung der Abspannmittel an der Bodeneinrichtung einerseits und an der Kabine andererseits;
- Fig. 3: zeigt die Einzelheit X aus Fig. 2 in vergrößerter Darstellung.

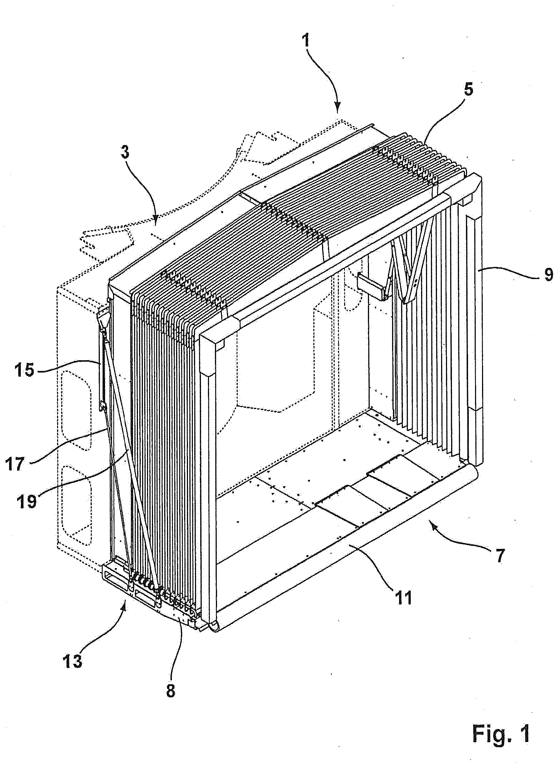

Gemäß der Fig. 1 weist das Kuppelmodul 1 die Kabine 3 und das an der Kabine 3 angeordnete U-förmige Falten- oder Wellenvordach 5 auf. Durch das U-förmige Falten- oder Wellenvordach 5 ist die Bodeneinrichtung 7 überspannt. Das U-förmige Falten- oder Wellenvordach weist auf seiner dem Flugzeug zugewandten Seite einen U-förmigen Bumper 9 auf. Die Bodeneinrichtung 7 weist ebenfalls einen Bumper 11 auf, der sich über die Vorderkante der Bodeneinrichtung 7 erstreckt. Das U-förmige Falten- oder Wellenvordach 5 ist mit der Bodeneinrichtung 7 verbunden. Erkennbar steht die Bodeneinrichtung 7 seitlich (Pfeil 13) über die Seitenwände des Vordachs 5 über. Auch die Kabine 3 der Fluggastbrücke überragt seitlich das Vordach 5, sodass die Kabine 3 seitlich an ihrer Hochseite eine Konsole 15 aufnehmen kann, an der zwei Abspannmittel 17 und 19 mit Abstand zueinander befestigt sind. Die beiden Abspannmittel 17 und 19 sind beabstandet zueinander und hintereinander im Seitenbereich 8 der Bodeneinrichtung 7 angeordnet.

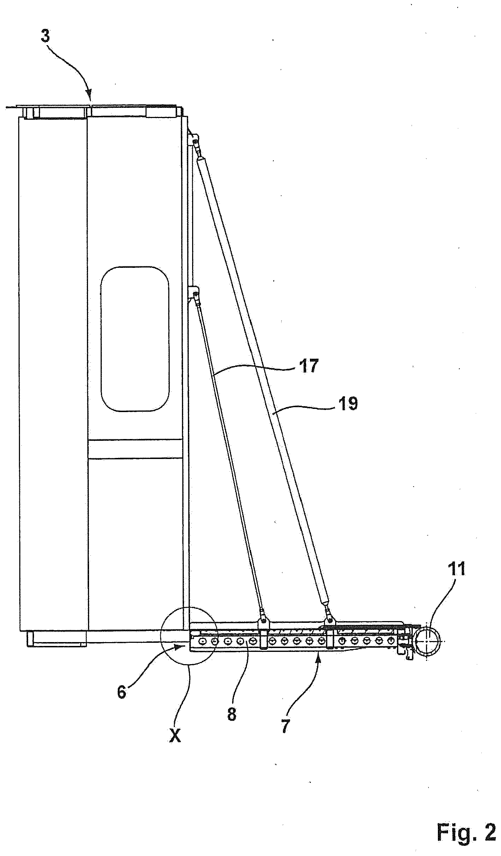

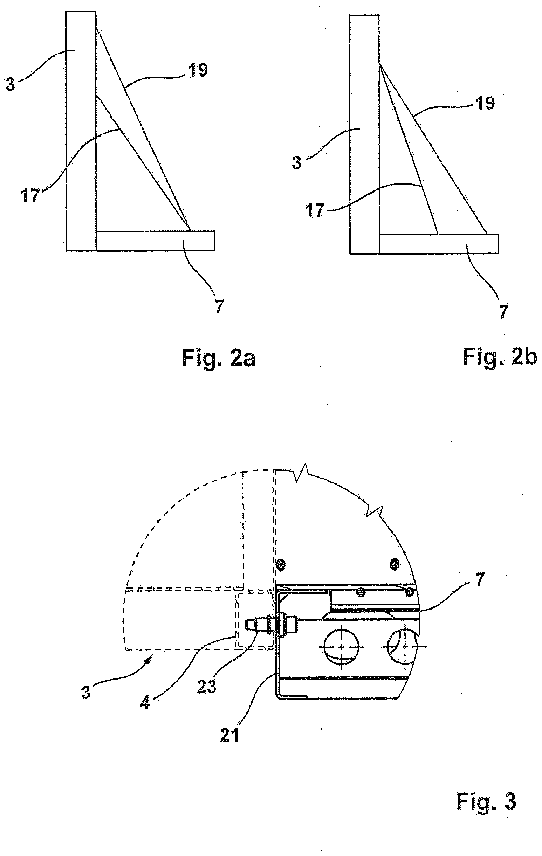

Wie sich aus der Darstellung gemäß Fig. 2 ergibt, sind die Abspannmittel 17 und 19 sowohl im Bereich der Konsole 15 als auch in dem Seitenbereich 8 der Bodeneinrichtung 7 jeweils gelenkig gelagert. Die Abspannmittel 17 und 19 können als Seile oder als Stangen ausgebildet sein. Es besteht allerdings auch die Möglichkeit, beispielsweise das eine Abspannmittel 17 als Seil und das andere Abspannmittel 19 als Stange auszubilden. Wenn dabei durch Verkürzung des Seiles die Stange auf Druck beansprucht wird, dann erfolgt eine Verspannung der Bodeneinrichtung 7 gegenüber der Kabine 3 der Fluggastbrücke. Das heißt, die Stange kann je nach Einbauzustand auf Zug oder Druck beansprucht werden.

Fig. 2a und Fig. 2b zeigen schematisch jeweils eine andere Art der Anordnung der Abspannmittel 17, 19 an der Bodeneinrichtung 7 einerseits und an der Kabine 3 andererseits. Hierbei sind die Abspannmittel 17, 19 jeweils an einem Punkt an der Bodeneinrichtung 7 oder an der Kabine 3 angeordnet. Am jeweils gegenüberliegenden Ende erfolgt die Anlenkung der beiden Abspannmittel 17, 19 an zwei beabstandet zueinander angeordneten Punkten.

Aus Fig. 3 ist die Tragstruktur 21 der Bodeneinrichtung 7 erkennbar, wobei die Tragstruktur 21 nach Art eines U-förmigen Winkels ausgebildet ist. Im Bereich des Steges des U-förmig ausgebildeten Winkels der Tragstruktur 21 sind Schrauben 23 angeordnet, um die Bodeneinrichtung 7 mit der Kabine 3 zu verbinden. Hierzu weist die Kabine 3 einen Träger 4 auf, der sich quer zu der Kabine 3 erstreckt.

## Patentansprüche

1. Fluggastbrücke mit einer Kabine (3) und einem Kuppelmodul (1) zur Bildung einer Schnittstelle zwischen der Kabine (3) und einem Flugzeug, wobei
- das Kuppelmodul (1) ein Vordach (5) und eine vom Vordach überspannte Bodeneinrichtung (7) aufweist,
- die Bodeneinrichtung (7) mit ihrer der Kabine (3) zugewandten Stirnseite (6) an der Kabine (3) durch mindestens ein lösbares Befestigungsmittel (23) befestigt ist und beabstandet zu ihrer Stirnseite (6) durch mindestens ein Abspannmittel (17, 19) mit der Kabine (3) verbunden ist,
**dadurch gekennzeichnet,**
**dass** die Kabine (3) an jeder Hochseite eine Konsole (15) zur Befestigung des mindestens einen Abspannmittels (17, 19) aufweist, wobei die Konsole (15) seitlich über die Kabine (3) übersteht und die Bodeneinrichtung (7) entsprechend der Konsole (15) seitlich über das Vordach (5) übersteht und das mindestens eine Abspannmittel (17, 19) seitlich an dem Vordach (5) vorbeigeführt ist.

2. Fluggastbrücke nach Anspruch 1,
**dadurch gekennzeichnet,**
**dass** das mindestens eine Befestigungsmittel als Schrauben (23) ausgebildet ist.

3. Fluggastbrücke nach einem der voranstehenden Ansprüche,
**dadurch gekennzeichnet,**
**dass** das mindestens eine Abspannmittel (17, 19) als Seil oder Stange ausgebildet ist.

4. Fluggastbrücke nach Anspruch 3,
**dadurch gekennzeichnet,**
**dass** das mindestens eine Abspannmittel in der Länge veränderbar ist.

5. Fluggastbrücke nach einem der voranstehenden Ansprüche,
**dadurch gekennzeichnet,**
**dass** in beiden Seitenbereichen der Bodeneinrichtung (7) mindestens ein, vorzugsweise zwei Abspannmittel (17, 19) beabstandet zur Stirnseite (6) angeordnet ist/sind, das/die mit der Kabine (3) verbindbar ist/sind.

6. Fluggastbrücke nach Anspruch 5,
**dadurch gekennzeichnet,**
**dass** die vorzugsweise beiden Abspannmittel (17, 19) auf jeder Seite der Bodeneinrichtung (7) beabstandet zueinander und hintereinander an der Bodeneinrichtung (7) angeordnet sind.

7. Fluggastbrücke nach Anspruch 5 oder 6,
**dadurch gekennzeichnet,**
**dass** die vorzugsweise beiden Abspannmittel (17, 19) derart ausgebildet sind, dass diese in der oberen Hälfte, vorzugsweise im oberen Drittel der Kabine (3) anlenkbar sind.

8. Fluggastbrücke nach einem der voranstehenden Ansprüche,
**dadurch gekennzeichnet,**
**dass** die Bodeneinrichtung (7) an ihrer der Kabine (3) zugewandten Stirnseite (6) eine Tragstruktur (21) aufweist, die durch das mindestens eine Befestigungsmittel mit der Kabine (3) verbindbar ist.

9. Fluggastbrücke nach einem der voranstehenden Ansprüche, **dadurch gekennzeichnet,**
**dass** die Konsole (15) mit der Kabine (3) verschraubt ist.

## Claims

1. A passenger boarding bridge with a cabin (3) and a coupling module (1) for forming an interface between the cabin (3) and an aircraft, wherein
- the coupling module (1) has a floor assembly (7) and a canopy roof (5) spanning the floor assembly,
- the floor assembly (7) is attached by at least one detachable attachment means (23) to the cabin (3) with its end face (6) facing the cabin (3) and is spaced apart from its end face (6) and is connected to the cabin (3) by at least one bracing means (17, 19),
**characterized in that** the cabin (3) has a console (15) for attachment of the at least one bracing means (17, 19) at each high side,
wherein the console (15) protrudes laterally above the cabin (3) and the floor assembly (7) corresponding to the console (15) protrudes laterally above the canopy roof (5) and the at least one bracing means (17, 19) is moved laterally past the canopy roof (5).

2. The passenger boarding bridge according to claim 1, **characterized in that**
the at least one attachment means is embodied as a screw (23).

3. The passenger boarding bridge according to any of the foregoing claims, **characterized in that**
the at least one bracing means (17, 19) is embodied as a cable or a rod.

4. The passenger boarding bridge according to claim 3, **characterized in that**
the at least one bracing means can be altered in its length.

5. The passenger boarding bridge according to any of the foregoing claims, **characterized in that**
in both lateral regions of the floor assembly (7) at least one, preferably two bracing means (17, 19) is/are arranged spaced apart from the end face (6), which can be connected to the cabin (3).

6. The passenger boarding bridge according to claim 5, **characterized in that**
the preferably two bracing means (17, 19) are spaced apart from each other on each side of the floor assembly (7) and are arranged one after the other at the floor assembly (7).

7. The passenger boarding bridge according to claim 5 or 6,
**characterized in that**
the preferably two bracing means (17, 19) are embodied such that these are connectible in the upper half, preferably in the upper third of the cabin (3).

8. The passenger boarding bridge according to any of the foregoing claims,
**characterized in that**
the floor assembly (7) has a supporting structure (21) on its end face (6) facing the cabin (3), which can be connected to the cabin (3) by the at least one attachment means.

9. The passenger boarding bridge according to any of the foregoing claims,
**characterized in that** the console (15) is screwed to the cabin (3).

## Revendications

1. Passerelle d'embarquement avec une cabine (3) et un module d'accouplement (1) pour la formation d'une interface entre la cabine (3) et un avion, dans laquelle
- le module d'accouplement (1) présente un auvent (5) et un dispositif de fond (7) recouvert par l'auvent,
- le dispositif de fond (7) est fixé avec sa face frontale (6) tournée vers la cabine (3) sur la cabine (3) par au moins un moyen de fixation (23) libérable et relié à la cabine (3) de manière espacée de sa face frontale (6) par au moins un moyen d'haubanage (17, 19),
**caractérisée en ce**
**que** la cabine (3) présente sur chaque côté vertical une console (15) pour la fixation du au moins un moyen d'haubanage (17, 19),
dans laquelle la console (15) fait saillie latéralement de la cabine (3) et le dispositif de fond (7) fait saillie latéralement de l'auvent (5) de manière correspondante à la console (15) et le au moins un moyen d'haubanage (17, 19) est guidé latéralement devant l'auvent (5).

2. Passerelle d'embarquement selon la revendication 1, **caractérisée en ce**
**que** le au moins un moyen de fixation est réalisé sous la forme de vis (23).

3. Passerelle d'embarquement selon l'une quelconque des revendications précédentes,
**caractérisée en ce**
**que** le au moins un moyen d'haubanage (17, 19) est réalisé sous la forme d'un câble ou d'une tige.

4. Passerelle d'embarquement selon la revendication 3, **caractérisée en ce**
**que** le au moins un moyen d'haubanage est variable en longueur.

5. Passerelle d'embarquement selon l'une quelconque des revendications précédentes,
**caractérisée en ce**
**qu'**au moins un, de préférence deux moyens d'haubanage (17, 19), qui peut/peuvent être relié(s) à la cabine (3), est/sont disposé (s) à distance de la face frontale (6) dans les deux zones latérales du dispositif de fond (7).

6. Passerelle d'embarquement selon la revendication 5, **caractérisée en ce**
**que** les de préférence deux moyens d'haubanage (17, 19) sont disposés sur chaque face du dispositif de fond (7) à distance l'un de l'autre et l'un derrière l'autre sur le dispositif de fond (7).

7. Passerelle d'embarquement selon la revendication 5 ou 6,
**caractérisée en ce**
**que** les de préférence deux moyens d'haubanage (17, 19) sont réalisés de telle sorte que ceux-ci peuvent être articulés dans la moitié supérieure, de préférence dans le tiers supérieur de la cabine (3).

8. Passerelle d'embarquement selon l'une quelconque des revendications précédentes,
**caractérisée en ce**
**que** le dispositif de fond (7) présente sur sa face frontale (6) tournée vers la cabine (3) une structure de support (21), qui peut être reliée à la cabine (3) par le au moins un moyen de fixation.

9. Passerelle d'embarquement selon l'une quelconque des revendications précédentes,
**caractérisée en ce**
**que** la console (15) est vissée à la cabine (3).
